# EUROPEAN PATENT SPECIFICATION

(11) **EP 1 289 103 B1**
(45) Date of publication and mention of the grant of the patent: **02.03.2011**
(21) Application number: 02018819.9
(22) Date of filing: 23.08.2002
(51) Int. Cl.: H02K 41/03, H02K 9/04

(54) **Air cooled linear motor**
Luftgekühlter Linearmotor
Moteur linéaire refroidi par air

(30) Priority: 29.08.2001 JP 2001259104; 11.06.2002 JP 2002170036
(43) Date of publication of application: 05.03.2003
(60) Divisional application: 07150288.4
(73) Proprietor: YAMAZAKI MAZAK KABUSHIKI KAISHA, Niwa-gun Aichi-ken (JP)
(72) Inventor: Yamazaki, Tsunehiko, Nagoya-shi, Aichi-ken (JP); Ohnishi, Kohei, Yokohama-shi, Kanagawa-ken (JP); Miyagawa, Naoomi, Gifu-shi, Gifu-ken, Aichi-ken (JP); Inoue, Toshihiko, Komaki-shi, Aishi-ken (JP)
(74) Representative: Bauer, Wulf

(56) References cited:
- DE-A1- 10 019 230
- US-A- 4 151 447
- US-A- 5 959 374
- PATENT ABSTRACTS OF JAPAN vol. 013, no. 295 (E-783), 7 July 1989 (1989-07-07) -& JP 01 074056 A (MITSUBISHI ELECTRIC CORP), 20 March 1989 (1989-03-20)
- PATENT ABSTRACTS OF JAPAN vol. 018, no. 493 (E-1606), 14 September 1994 (1994-09-14) -& JP 06 165474 A (SEIKOSHA CO LTD; others: 01), 10 June 1994 (1994-06-10)
- PATENT ABSTRACTS OF JAPAN vol. 013, no. 142 (E-739), 7 April 1989 (1989-04-07) -& JP 63 302755 A (CANON INC), 9 December 1988 (1988-12-09)
- PATENT ABSTRACTS OF JAPAN vol. 2000, no. 20, 10 July 2001 (2001-07-10) -& JP 2001 069744 A (MIRAE CORP), 16 March 2001 (2001-03-16) & US 6 528 905 B1 (HWANG JI HYUN ET AL) 4 March 2003 (2003-03-04)
- PATENT ABSTRACTS OF JAPAN vol. 1997, no. 02, 28 February 1997 (1997-02-28) -& JP 08 275489 A (YASKAWA ELECTRIC CORP), 18 October 1996 (1996-10-18)
- PATENT ABSTRACTS OF JAPAN vol. 1996, no. 06, 28 June 1996 (1996-06-28) -& JP 08 051759 A (HITACHI METALS LTD), 20 February 1996 (1996-02-20)
- PATENT ABSTRACTS OF JAPAN vol. 016, no. 499 (E-1280), 15 October 1992 (1992-10-15) -& JP 04 185264 A (FUJI ELECTRIC CO LTD), 2 July 1992 (1992-07-02)

## Description

### BACKGROUND OF THE INVENTION

This invention relates to a linear motor in accordance with the preamble of claim 1. Such a linear motor is known from DE 100 19 230 A1.

A recent proposal concerning various kinds of machine tools including a laser beam machine is that a linear motor is adopted for feeding and driving a movable member, such as a machining head, with respect to a workpiece.

When the movable member of a machine tool is moved and driven with a linear motor, heavy heat, such as the heat owing to eddy current generated at a stationary member and a moving member which comprise a linear motor and joule heat generated at an electromagnetic coil is generated. And, this heat causes thermal deformation on a structural member or a movable member.

This heat displacement is not always caused on the whole machine tool uniformly, but the quantity of displacement is big in the heating portion and the portion in the vicinity, and the quantity of the displacement becomes to be small as the portion is far from the heat generating portion. This causes the decrease of machining efficiency at the time of machining a workpiece for the above-mentioned reason.

The object of the present invention is to improve the a.m. linear motor in respect of a good cooling efficiency, taking the above-mentioned circumstances into consideration. This object is solved by the linear motor with the features of claim 1.

### SUMMARY OF THE INVENTION

This linear motor is effectively cooled so as to restrict heat displacement of a machine tool at the minimum. Then, machining with high accuracy is possible.

In accordance with the features of claim 2 both the stationary member and the moving member can be cooled, and the machining with higher accuracy is possible.

In accordance with the invention the armature located on the moving member side or the magnet located on the stationary member side can be cooled.

In accordance with the invention effective cooling is possible although the linear motor has two or more rows of the armature row and then, joule heat generated is big for this reason.

In accordance with the features of claim 3 effective cooling is possible by increasing the quantity of wind to the first air flow path for cooling.

According to claim 4 said first air supply means is provided on said moving member.

According to claim 5 said first air supply means supplies said fourth air flow path formed in said moving member with wind.

### BRIEF DESCRIPTION OF THE DRAWINGS

Fig.1 is a perspective view of a laser beam machine as an example of a machine tool to which a linear motor of the present invention is applied;
Fig.2 is a perspective view of the linear motor according to an example useful for understanding the invention;
Fig.3 is a perspective view for showing air flow in a coil core portion of Fig. 2;
Fig. 4 is a longitudinal section for showing an example of the whole structure of the linear motor according to the present invention;
Fig. 5 is a detailed longitudinal section of Fig.4;
Fig. 6 (a) is a sectional view from line E-E of Fig. 5 and Fig.6(b) is view for showing an air blower and the like seen from a side of the linear motor;
Fig.7 is a perspective view for showing appearances of a stationary member;
Fig.8 is a perspective view for showing appearances of a base portion;
Fig.9 is a detailed view of Fig.6(a);
Fig.10 is a perspective view for showing a structure of broken moving member; and
Fig. 11 is a perspective view for showing a structure of the moving member.

### DESCRIPTION OF THE PREFERRED EMBODIMENTS

Embodiments of the present invention will now be explained hereinafter, referring to drawings.

A linear motor according to the present invention has a stationary .member (see marks 31 and 102) and a moving member (see marks 51 and 103) located so as to face each other, and is for moving the moving member (see marks 51 and 103) along the stationary member (see marks 31 and 102), making use of a force acting between a magnet (see marks 35 and 120) and an armature (see marks 53, 54 and 130), and has a first air flow path for cooling (39, 139) formed along the magnet (35, 120) or the armature (53, 54 and 130) located on the stationary member side. In this structure of the linear motor, wind is fed to the first air flow path for cooling (39, 139) with a first air supply means (41 or 42, 141 or 142). Details will now be explained.

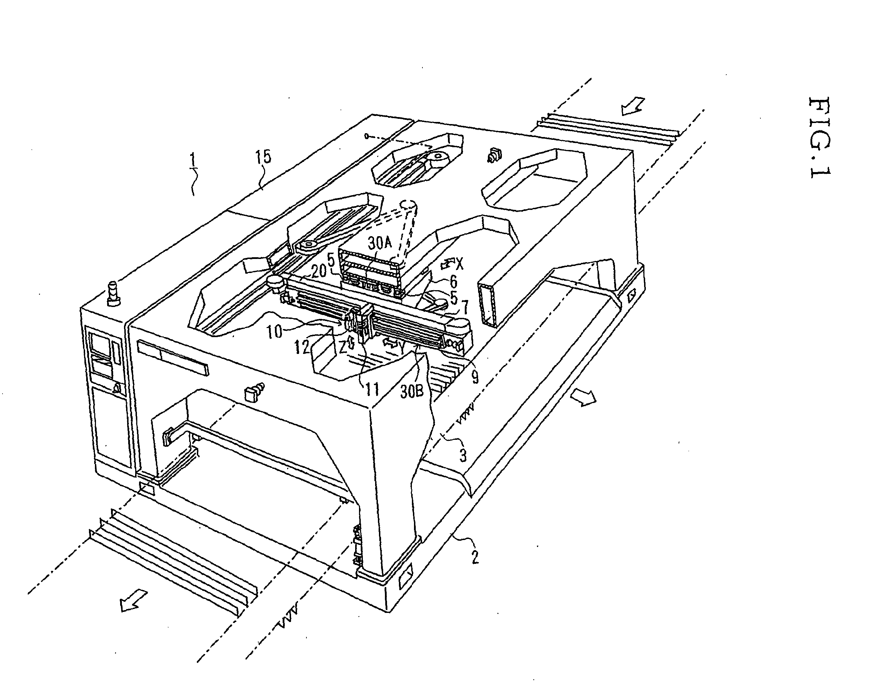

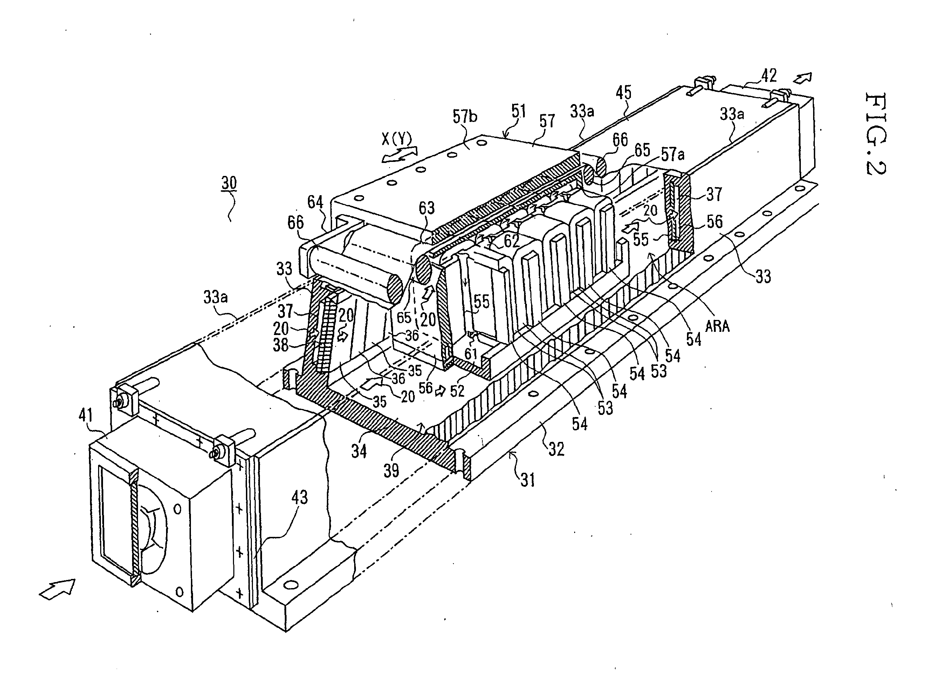

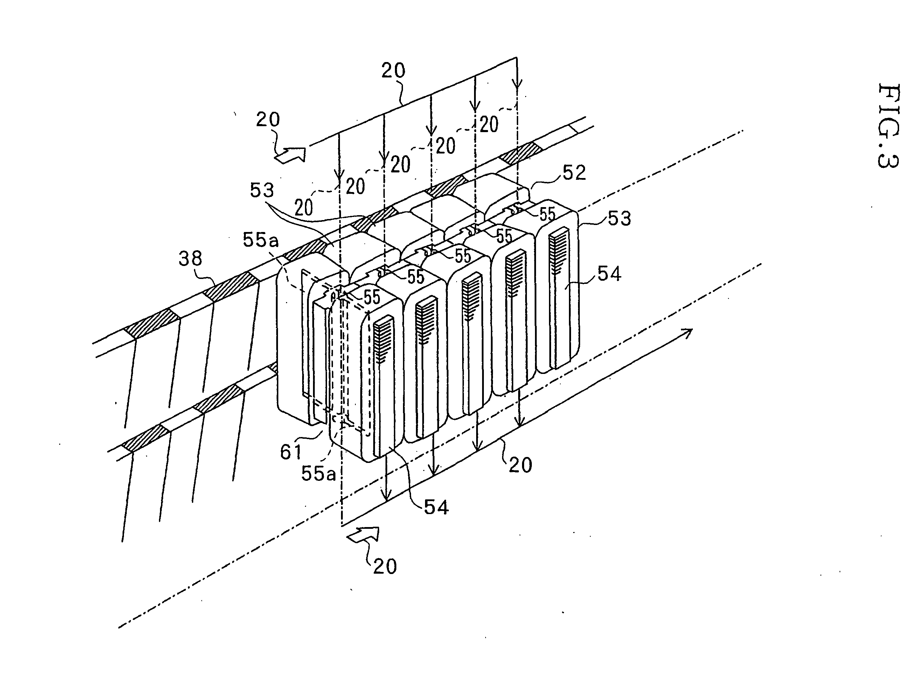

Fig.1 is a perspective view of a laser beam machine as an example of a machine tool to which a linear motor of the present invention is applied. Fig.2 is a perspective view of the linear motor, and Fig. 3 is a perspective view for showing air flow.

As shown in a laser beam machine 1 has a frame 2, and the frame 2 is provided with a table 3 (shown by a dashed line) for locating a workpiece to be machined (not shown) thereon so as to penetrate the frame 2 in X-axis direction. And, the frame 2 is provided with X-axis rails 5, 5 extending in a horizontal X-axis direction, positi-oning over the table 3.

A moving body 6 is engaged with the X-axis rails 5, 5, and is supported by the rails 5, 5, being suspended so as to be free to move in the X-axis direction (linear moving direction). A drive unit 30A in a linear motor style is provided for moving, driving and positioning the moving body 6 with respect to the X-axis rail 5 side along the X-axis - direction, bridging both the frame 2 and the moving body 6. Details of the drive unit 30A will be described hereinafter.

The moving body 6 is fixedly provided with a column 7. The column 7 is provided with a Y-axis rail 9, extending in a horizontal Y-axis direction perpendicular to the X-axis so as to position over the table 3.

A head unit 10 is engaged with this Y-axis rail 9, and is provided being free to move in the Y-axis direction (linear moving direction) . And, a drive unit 30B in a linear motor style is provided for moving, driving and positioning the head unit 10 with respect to the Y-axis rail 9 side along the Y-axis direction, bridging both the column 7 and the head unit 10. Details of the drive unit 30B will be described hereinafter.

The head unit 10 has a torch 11 capable of radiating laser beam LZ downward, and a Z-axis moving drive means 12 capable of moving, driving and positioning the torch 11 in a Z-axis direction which is up and down direction. On this occasion, a laser beam transferring path for transferring laser beam supplied from the laser beam oscillating unit 15 is provided from a laser beam oscillating unit 15 (not shown) to the torch 11.

Both the drive unit 30A and the drive unit 30B are both drive units in a linear motor style, and their structures are the same although both are different from each other in their size and in their locations to be positioned. So, both driving units 30A, 30B will now be collectively explained as a driving unit 30.

As shown in Fig. 2, the driving unit 30 is comprised of a stationary member 31 and a moving member 51. The stationary member 31 is provided, being fixed on the frame 2 or the column 7 (see Fig. 1), and the stationary member 31 has a guide body 32 extending in the X or the Y direction. A pair of guides 33 are formed at the guide body 32, projecting with a predetermined space, parallel to the longitudinal direction of the guide body 32 (the direction of the arrow X or Y). Then, a ditch 34 having a U-shaped section is formed by the guide body 32 and a pair of guides 33. On this occasion, a movable area ARA in the shape of a ditch is formed in the ditch 34 for moving and driving the moving member 51 in the X (Y)-axis direction.

On the faces facing each other of a pair of the guides 33, two magnet rows 38 are located facing each other in such a manner that each magnet row 38 is comprised of a plurality of magnets 35 respectively formed in the shape of a plate and a plurality of spacers 36 made of non-magnetic material, and respectively formed in the shape of a plate, and each magnet row 38 is formed so as to arrange the magnet 35 and the spacer 36 alternately. And, an air flow path 37 which is the second air flow path for cooling is formed between one face facing the other face of the guide 33 and the magnet row 38 attached on one face.

An air blower 41 for intake (first air supply means) and an air blower 42 for exhaustion (first air supply means) are provided at both ends in the longitudinal direction of the ditch 34 (in the arrow X (Y) direction). A cover 45 in the shape of a band made of metal is provided, closing the space of the ditch 34 of the stationary member 31 enclosed by the guide body 32, a pair of the guides 33 and a pair of the air blowers 41, 42, that is, the opening portion of the moving area ARA of the moving member 51. Then, an air flow path 39 which is a first air flow path for cooling is formed by the ditch 34 and the cover 45. That is, the air flow path 39 is formed along the magnets 35 of the stationary member side and the air flow path 39 is supplied with wind by the air blowers 41, 42 in the structure of the present embodiment. Either of the air blowers 41, 42 may be provided.

An air purifying means 43 is located between the air flow paths 37, 39 and the air blower 41. This air purifying means 43 is comprised by piling a dust filter in the shape of a flat plate and a magnet separator in the shape of a flat plate for removing magnetic metal powder, and catches and removes dust and magnetic metal powder in the air supplied from the air blower 41 to the air flow paths 37, 39. Therefore, clean state can be maintained in the air flow path 39 even in the place where much foreign objects exist, such as dust and magnetic metal power, for example in a machine tool plant.

On this occasion, Fig.2 shows that the air purifying means 43 is located on the downstream side of the air blower 41, but similar effects can be obtained even if the air purifying means 43 is located on the upstream side of the air blower 41. Besides, the first air supply means may be comprised by the air blower 41 and the air purifying means 43 united with each other.

The moving member 51 has a movable base 52 slidably located in the ditch 34. A plurality of coil cores 54 (five on each side in Fig.2) formed piling, installing electromagnetic coils 53 on the both ends facing the magnetic rows 38, are fixedly provided at the movable base 52. An air flow path 55 which is a third air flow path for cooling is formed, penetrating the coil core 54 in the piling direction of the coil core 54 (in up and down direction in the figure) in its center portion.

A guide plate 56 is fixed on the end portion of the air blower 41 side of the movable base 52 so as to contact with the end portions of the electromagnetic coil 53 and the coil core 54, and air supplied from the air blower 41 in the ditch 34 is guided to a guide flow path 62 described hereinafter.

A slider 57 is fixed on the movable base 52 through the coil core 54 so as to face the movable base 52 putting the electromagnetic coil 53 and the coil core 54 therebetween. An end portion 57a of the air blower 42 side of the slider 57 projects for the lower hand in the figure for the movable base 52 side so as to contact with the end portions of the electromagnetic coil 53 and the coil core 54.

A guide flow path 61 communicating with the third air flow path 55 formed in the coil core 54 is formed in the X (Y) axis direction, that is, in the moving direction of the movable base 52 between the movable base 52 and, the electromagnetic coil 53 and the coil core 54 in such a manner that both right and left sides in the figure are sandwiched by the coils 53. The guide flow path 61 communicates with the air blower 42 through the ditch 34 separated into the front and the rear in the X (Y) axis direction which is the direction of moving the moving member 51 by the moving member 51, that is, through one side of the air flow path 39.

And, the guide flow path 62 communicating with the third air flow path 55 formed in the coil core 54 is formed in the X (Y) axis direction, that is, in the moving direction of the movable base 52 between the slider 57 and, the electromagnetic coil 53 and the coil core 54 in such a manner that both right and left sides in the figure are sandwiched by the electromagnetic coils 53. The guide flow path 62 communicates with the air blower 41 through the ditch 34 separated into the front and the rear in the X (Y) axis direction which is the direction of moving the moving member 51 by the moving member 51, that is, through the other side of the air flow path 39.

Then, a pair of the upper and lower guide flow paths 61, 62 in Fig.2 are formed, sandwiching the coil core 54 by both sides in the piling direction of the coil core 54. Furthermore, with this structure, the front and the rear of the air flow path 39 divided by the moving member 51 are communicated and connected with each other by the guide flow paths 61, 62 of the moving member 51 and the air flow path 55 formed in the coil core 54.

A slit 63 is formed at the slider 57, penetrating in its running direction (in the arrow X or Y direction), and the cover 45 penetrates the slit 63 so as to relatively move. And, a pair of supporting members 64 are fixedly provided at both ends of the slider 57 in the moving direction. A pair of guide rollers 65, 66 are rotatably supported by these supporting members 64 in such a manner that the axis is located in the direction perpendicular to the moving direction of the moving member 51.

Each guide roller 65 located near the slider 57 guides the cover 45 penetrating the slit 63 of the slider 57 such that the cover does not contact with the inlet of the slit 63. And, each guide roller 66 located at a position remote from the slider 57 guides the cover 45 so as not to raise the cover 45 from an end face 33a of the guide 33.

In the case of the drive unit 30A, the moving body 6 is fixedly provided on an end face 57b of the slider 57, and in the case of the drive unit 30B, the head unit 10 is fixedly provided on the end face 57b of the slider 57.

With this structure, alternating current is applied on the electromagnetic coil 53 such that the magnetic force generated at the electromagnetic coil 53 and the magnetic force of the magnet 35 pull or repel each other so as to move the slider 57 (the moving member 51) in the arrow X (Y) direction.

At this time, the cover 45 is separated from the guide 33 along the guide roller 66 by the travel motion of the moving member 51 at the top end side in the travel motion direction of the moving member 51 and is guided to the guide roller 65. And, the cover 45 is received in the slit 63 of the slider 57 without contacting with the opening portion of the slit 63 by the guide roller 65.

On the other hand, the cover 45 penetrating the slit 63 is guided to the guide roller 65 on the rear end side in the travel motion direction of the moving member 51, and is pulled out of the slider 57 without contacting with the opening portion of the slit 63, and is guided to the guide roller 66. And, the cover 45 is guided so as to contact with the end face 33a of the guide 33, that is, the opening portion of the stationary member 31 by the guide roller 66.

And, the inside of the air flow path 39 is supplied with air for cooling from the air blower 41 for intake, and the air in the air flow path 39 is exhausted with the air blower 42 for exhaustion. Then, pressure difference occurs in such a manner that the pressure of the air is positive on the air blower 41 side rather than the moving member 51 in the air flow path 39 and the pressure of the air is negative on the air blower 42 side rather than the moving member 51.

Therefore, an air 20 supplying the air flow path 39 from the air blower 41 streams to the air blower 42 side after passi,ng through the clearance between the stationary member 31 and the moving member 51 by this pressure difference. At this time, a part of the air supplied in the air flow path 39 from the air blower 41 passes through the air flow path 37 formed between the guide 33 and the magnet row 38 so as to cool the magnet row 38 from its back, and the air is exhausted in the atmosphere from the air flow path 39 with the air blower 42. On this occasion, air may be supplied directly from the air blower 41 to the air flow path 37 with an appropriate means, and may be exhausted from the air blower 42 directly. Besides, another air supply means may be provided in addition to the air blowers 41, 42.

Besides, an another part of the air supplied in the air flow path 39 passes through the clearance formed between the moving member 51 and the ditch 34 so as to cool the magnet row 38 from its surface, and so as to cool the electromagnetic coil 53 and the coil core 54 of the moving member 51 from their outside, and the air is exhausted in the atmosphere from the air flow path 39 with the air blower 42.

Furthermore, an another part of the air supplied in the air flow path 39 from the air blower 41 streams in the guide flow path 62 along the guide plate 56, and passes through the air flow path 55 formed in the coil core 54 from the guide flow path 62 and streams in the guide flow path 61 so as to cool the coil core 54 from its inside as shown in Fig.3, thereafter the air is exhausted in the atmosphere from the air flow path 39 through the air flow path 39 with the air blower 42.

According to the above-mentioned example, the magnet row 38 is cooled from its surface and its back, and the electromagnetic coil 53 and the coil core 54 are cooled from their surfaces and their inner faces, thereby the increase of the temperature owing to the heating of the magnet 35 or the electromagnetic coil 53 and the coil core 54 can be effectively restricted and the heat displacement of a machine tool can be made small. Therefore, the machining accuracy of a machine tool can be improve.

The air flow path 55 formed in the coil core 54 does not have always the hole having a section in the shape of a circle, but the circular hole successively providing a wing 55a, projecting on the electromagnetic coil 53 side as shown in Fig.3. The air flow path 55 has such a shape, thereby the contacting area between the coil core 54 and air can be increased so as to further improve the cooling efficiency.

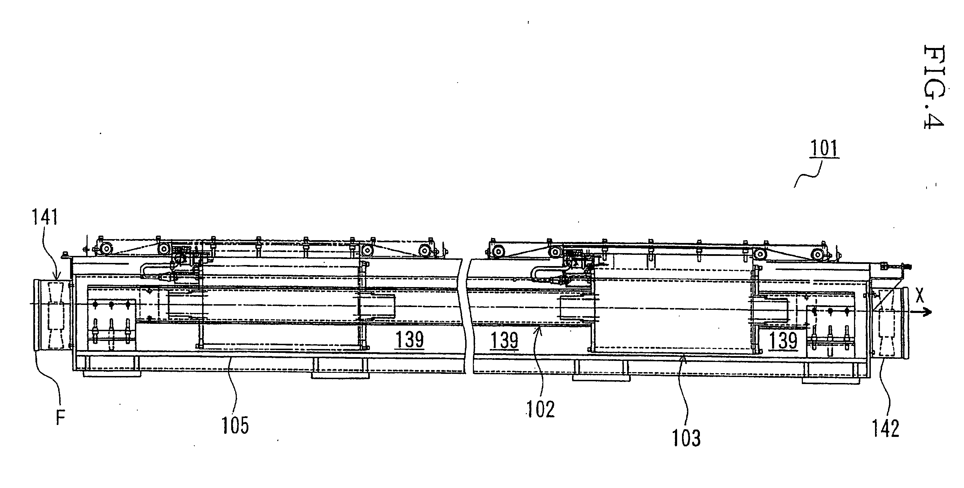

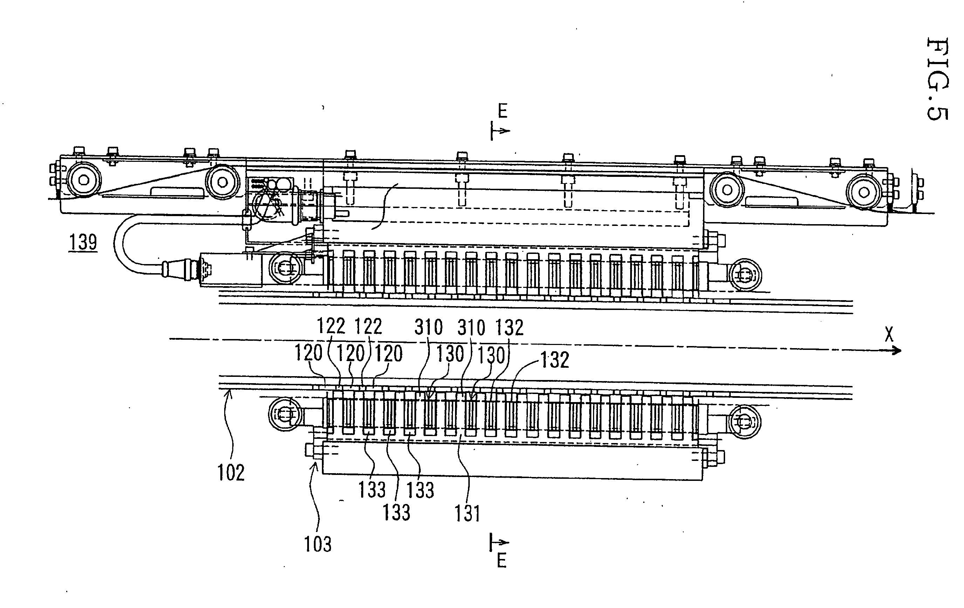

Next, the embodiment of the present invention will now be explained, referring to Figs . 4 through 11. Fig. 4 is a longitudinal section for showing an example of the whole structure of the linear motor according to the present invention, and Fig.5 is a detailed longitudinal section of Fig. 4.

As shown in Fig.4, a' linear motor 101 has a stationary member 102 having thin and long shape (almost bar shape) and a cylindrical moving member 103 fitted in the stationary member 102 having a play so as to be free to move. As shown in Fig. 5, a plurality of permanent magnets 120 are located on the stationary member 102 along the axial direction X, and armatures 130 are located on the moving member 103 so as to respectively face the permanent magnets 120 locating small distance therebetween. Then, the linear motor 101 1 has such a structure that the force generating between the magnet 120 and the armature 130 by switching the voltage applied on the armature 130 is utilized so as to move the moving member 103 along the stationary member 102.

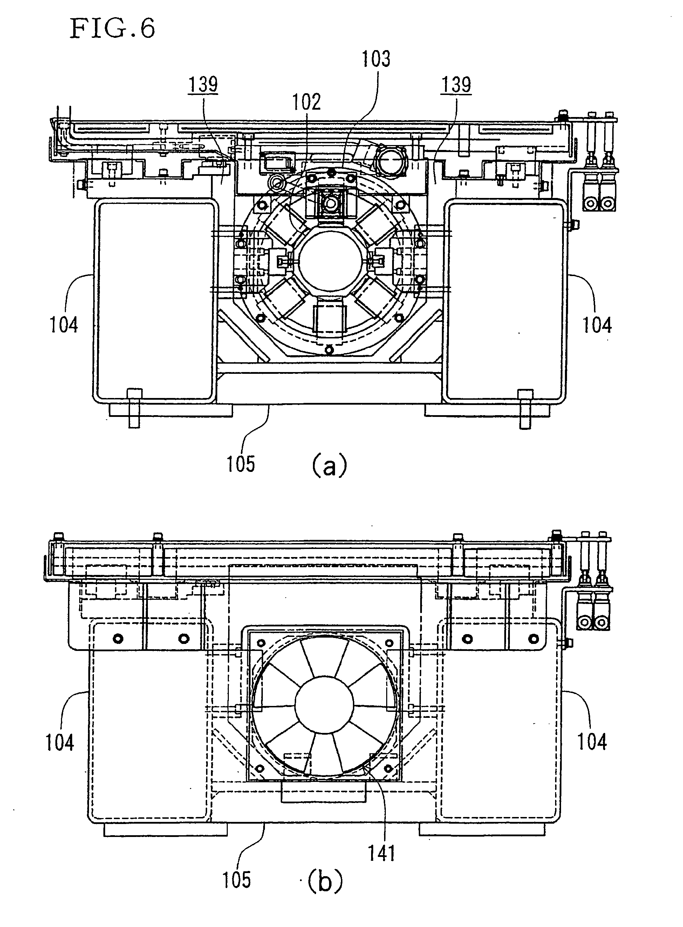

Fig.6 (a) is a sectional view from line E-E of Fig.5 and Fig. 6 (b) is view for showing an air blower 141 and the like seen from a side of the linear motor. As shown in Fig.6, frames 104, 104 and a base plate 105 are located along the axial direction X, enclosing the stationary member 102 and the moving member 103 so as to form an air flow path 139 (a first air flow path for cooling) . At one end of the air flow path 139, the air blower 141 for intake (a first air supply means) and a filter F are located, and at the other end, an air blower 142 for exhaustion (first air supply means) is provided so as to have such a structure that the air flow path 139 is supplied with an air with these air blowers 141, 142. That is, the air flow path 139 is formed along the magnets 120 on the stationary member side in the embodiment, and the moving member 103 moves in the air flow path 139.

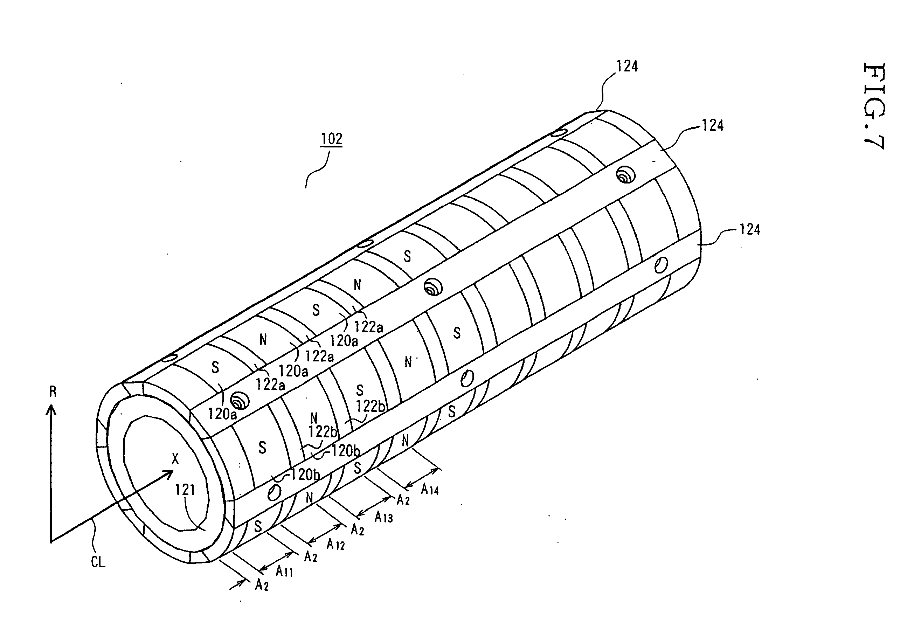

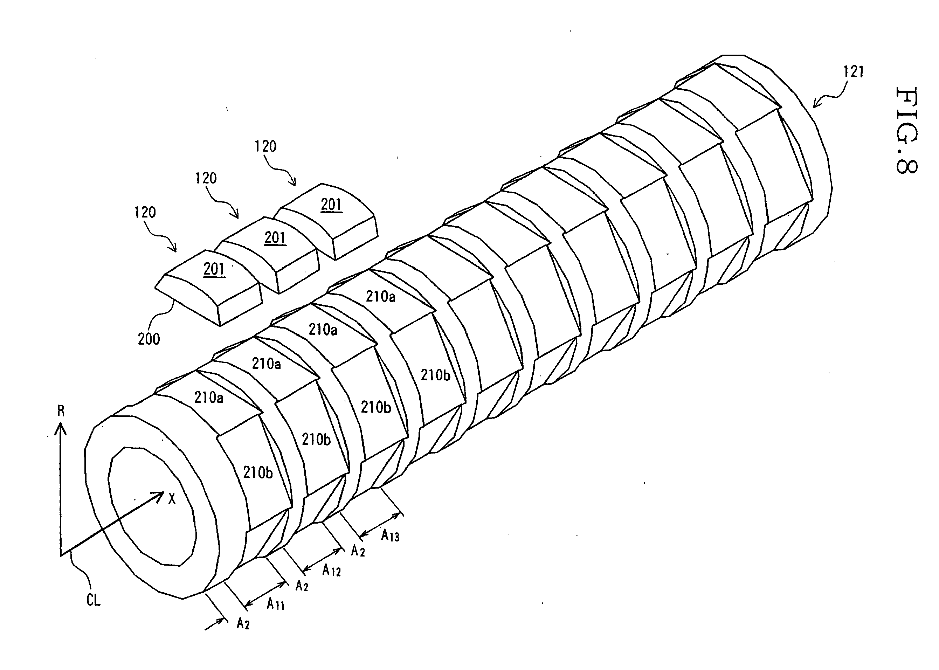

Subsequently, the detailed structure of the stationary member 102 will now be explained, referring to Figs.7 and 8. Fig.7 is a perspective view for showing appearances of the stationary member, and Fig.8 is a perspective view for showing appearances of a base portion.

The stationary member 102 has a slender base portion 121 having almost cylindrical shape, as shown in Figs. 7 and 8. The base portion 121 has such a shape that the outer peripheral face is comprised of six plane portions 210a, 210b, ... ..., and the portion having almost hexagonal pole appearance (A plurality of the portions are located along the axial direction X as shown by A₁₁, A₁₂, A₁₃, ... ... in Fig. 7, but the portion will be explained with only "A₁" if the portions are not necessary to be specifically identified. On this occasion, the portion is for installing the magnet 120 as described next, thereby the portion is referred as "magnet installation portion" , hereinafter.) and the portion A₂ having almost cylinder appearance ("annular portion A₂" hereinafter) are alternately located.

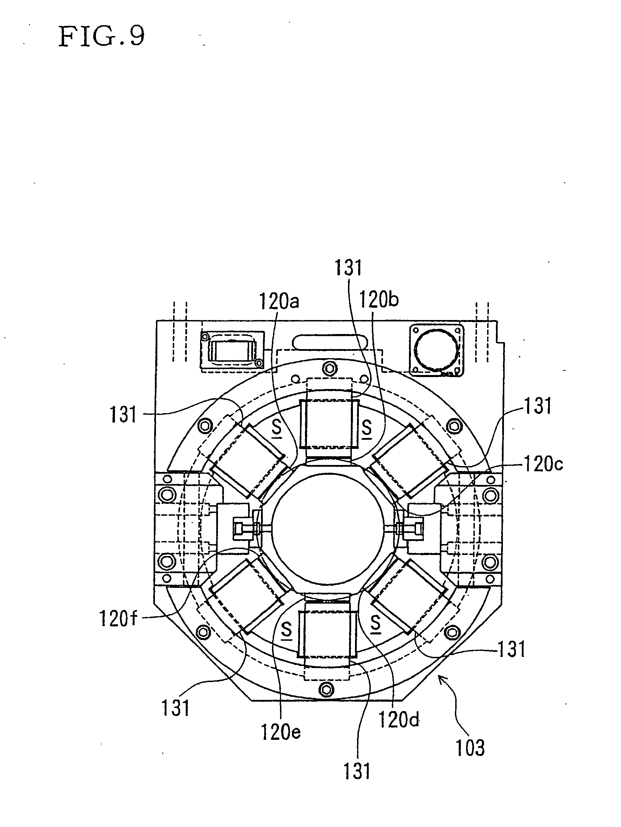

And, the permanent magnets 120 (When it is necessary to differentiate one permanent magnet from another of the permanent magnets to be installed on the plane portions 210a, 210b, ..., the marks 120a, 120b, ... ... are used for identification, and only the mark 120 is used if it is not necessary to differentiate.) are respectively located on the plane portions 210a, 210b, ... ... . Then, the permanent magnets 120 are located at a predetermined pitch in the axial direction X of the stationary member 102 (that is, the longitudinal direction of the stationary member 102, and the direction of moving the moving member 103) so as to form a magnet row (for instance, the magnet row of the marks 120a, 120a, 120a, ... ...) (see Fig.7) . Around the central axis CL, six magnet rows are radially (symmetrically with respect to the central axis CL) located (see Fig.9) .

Fig.9 is the detailed view of Fig.6(a). And, "symmetrically with respect to the central axis CL" in the present specification means such a state that the magnet rows or the armature rows are located every constant central angle (every 60° in case of the figure) in the cross section as shown in Fig.9. On this occasion, six permanent magnets 120a, 120b, ... ... located on one magnet installation portion A₁ are set in such a manner that the magnetic poles of an outer peripheral face 201 are all the same and the magnetic poles of the outer peripheral face 201 are alternately switched, such as S-N-S-N-S-N in the axial direction X. That is, the stationary member 102 as shown in Fig.7 has such a structure that the magnetic poles of the outer peripheral face 201 are all S poles in the magnet installation portion as shown in the mark A₁₁, the magnetic poles of the outer peripheral face 201 are all N poles in the magnet installation portion as shown in the mark A₁₂, the magnetic poles of the outer peripheral face 201 are all S poles in the magnet installation portion as shown in the mark A_{13.} and the magnetic poles of the outer peripheral face 201 are all N poles in the magnet installation portion as shown in the mark A₁₄. The permanent magnets 120 are arranged in this way, thereby two magnets adjacent to each other in the axial direction X pull each other. Then, it is easy to attach the magnet 120 to the base portion 121, and it is easy to assemble the stationary member 102.

A spacer 122 is located on the annular portion A₂ so as to fill up the gap between the magnets 120, 120 arranged in the axial direction X, as shown in Fig.5 and Fig.7. A mark 124 of Fig.7 shows a fixing bar for fixing the permanent magnet 120 and the spacer 122, pressing both ends of these (both end faces in the peripheral direction) down to the base portion 121.

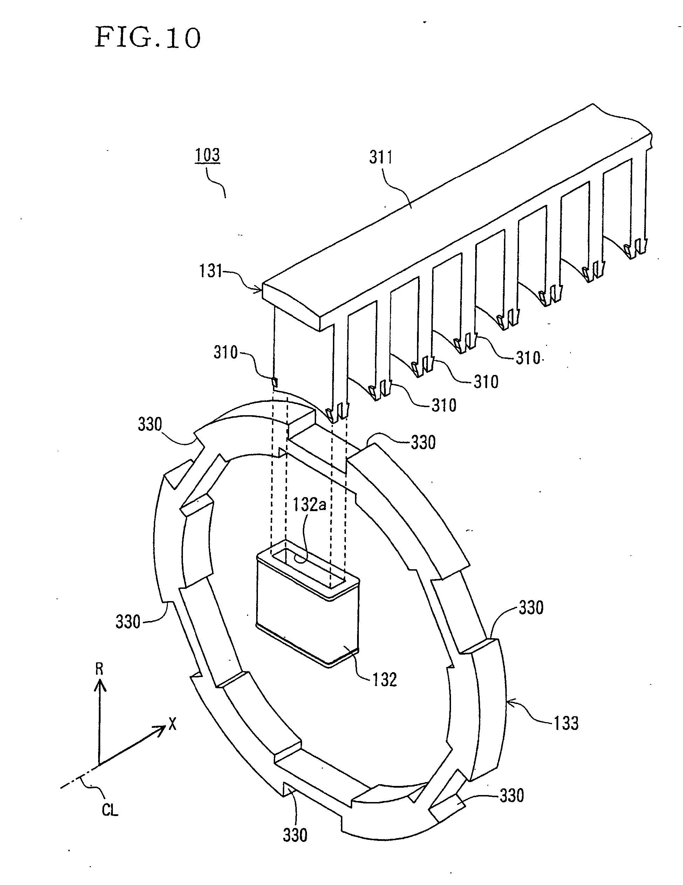

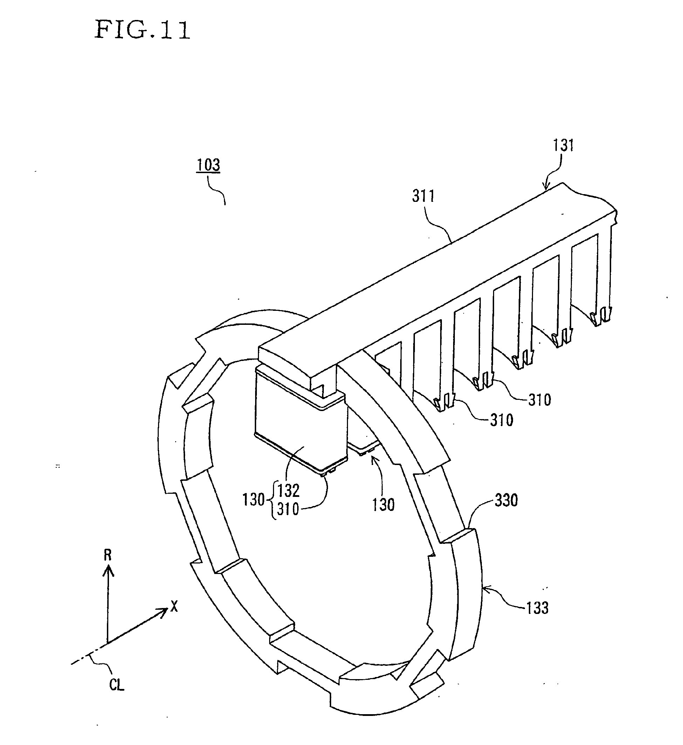

Subsequently, the structure of the moving member 103 will now be explained, referring to Figs.9 through 11. Fig.10 is a perspective view for showing a structure of the broken moving member 103, and Fig.11 is a perspective view for showing a structure of the moving member 103.

The moving member 103 has six iron core members 131, as shown in Fig.9, and these six iron core members 131 are arranged so as to face the six magnet rows 120a, ..., 120b, ..., 120c, ..., 120d, ..., 120e, ..., 120f, ..., on the stationary member side. Each iron core member 131 has a comb shape, comprised of the portion 311 arranged along the axial direction X ("back portion " hereinafter) and a plurality of iron core portions 310 arranged on the central axis CL hand from the back portion 311 , as shown in Figs.10 and 11. A coil 132 is fixed into each iron core portion 310 so as to comprise the armature 130. That is, in the embodiment, a plurality of armatures 130 are arranged in the axial direction X (that is, the longitudinal direction of the stationary member 102 and the direction of moving the moving member 103) so as to face the magnet rows (for instance, the magnet rows of the mark 120a, ...) so as to comprise the armature row, and six armature rows are radially (and symmetrically with respect to the central axis CL) arranged around the central axis CL. And, an air flow path as shown by a mark S in Fig.9 (fourth air flow path for cooling) is formed between the respective armature rows. This air flow path S is formed along the axial direction X, and the both wend portions are open so as to communicate with the air flow path 139 on the stationary member side. When the air flow path 139 on the stationary side is supplied with wind with the air blowers 141, 142, the wind is entered to the air flow path S on the moving member side so as to cool the armature 130. On this occasion, only one of the six iron core members 131 is shown in Figs . 10 and 11. And, only one coil 132 is shown in Fir. 10 and only two armatures 130 are shown in Fig.11.

As shown in Fig.5, the moving member 103 in the invention has a plurality of annular members 133 having the shape detailedly shown in Figs,10 and 11. On the outer peripheral side of the annular member 133, six ditch portions 330 ("outside ditch portion" hereinafter) are formed at equal intervals, and the back portion 311 of the iron core member 131 is inserted in each outside ditch portion 330 from its outside (from the outside of the annular member 133), as shown in Figs . 10 and 11. As shown in Fig . 5 , the annular member 133 is always located between the iron core portions 310, 310, but only one annular member 133 is shown in Fig.10 and 11 four good understanding. According to the embodiment, the gap between the iron core portion 310 and the permanent magnet 120 can be properly maintained since the iron core member 131 is supported by the annular member 133 although the iron core portion 310 is provided, extending for the permanent magnet 120 on the stationary member side, and is pulled to the permanent magnet 120 with a big force. Besides, the iron core member 131 is attached to the annular member 133, making use of the outside ditch portion 330, thereby positioning shift in the peripheral direction (the peripheral direction of the annular member 133) is made minimum so as to correctly radially locate as shown in Fig.9. Since an adhesive is not used for the attachment of the iron core member 131 to the annular member 133, furthermore, the work, such as the work for drying is not necessary so as to make the attachment work easy and so as to reduce the assembly error.

Subsequently, the operations of the embodiment will now be explained.

When voltage is successively applied on the coil 132 with a predetermined timing so as to excite the armature 130, a suction force or resiliency acts between each armature 130 and each permanent magnet 120 so as to move the moving member 103 in the axial direction X of the stationary member 102. That is, the moving member 103 is moved along the stationary member 102, making use of the force generated between the magnet 120 and the armature 130.

Besides, the air flow paths 139, S are supplied with wind when the air blowers 141, 142 are driven so as to cool the stationary member 102 and the moving member 103.

In the embodiment, the magnet 120 is located on the stationary member side and the armature 130 is located on the moving member side.

In the embodiment, one air blower 141 and one air blower 142 .are located at both ends of the air flow path 139, but this location is not limiting. Only one air blower may be located, or the air blower(s) may be located at the portion excluding the end of the path.

Furthermore, the air supply means for supplying the air flow paths 39, 55, 61, 62, 139 with wind, such as a cooling fan and a cooling air supply nozzle may be provided on the moving members 51, 103 such that the air flow paths 39, 55, 61, 62, 139 and S can be supplied with wind (air for cooling) from the air supply means provided on the moving member 51, 103 in addition to locating on the end portion of the air flow paths 39, 55, 61, 62, 139. Besides, an air supply port of the air supply means may be opened in the air flow paths 55, 61, 62 and S formed in the moving member 103 so as to firstly supply the inside of the air flow paths 55, 61, 62 and S on the moving member side with dry air for cooling supplied from the air supply means such that the armatures 53, 54 and 130 can be effectively cooled.

In the embodiment, the air flow path is located on the stationary member side (see the mark 139).

And, in the embodiment, six magnets 120 are located concerning the cross section of the stationary member 102, but another number of the magnets may be located.

Besides, in the embodiment, the stationary member 102 and the base portion 121 have a cylindrical shape, but this shape is not limiting, the shape may be a polygon. Furthermore, the stationary member 102 (concretely speaking, the base portion 121) is a hollow cylinder, but may be a solid bar.

In the embodiment, the magnet rows and the armature rows are symmetrically located with respect to the central axis CL of the stationary member 102 (that is, every constant central angle in the cross section as shown in Fig. 9), but may not be symmetrically located with respect to the central axis CL.

The invention is explained on the basis of the embodiment heretofore. The embodiment which is described in the present specification is illustrative and not limiting. The scope of the invention is designated by the accompanying claims and is not restricted by the descriptions of the specific embodiment. Accordingly, all the transformations and changes belonging to the claims are included in the scope of the present invention.

## Claims

1. Linear motor having a stationary member (102) and a moving member (103) located so as to face each other and so as to move said moving member (103) along said stationary member (102), making use of a force generated between a magnet (120) and an armature (130); whereby said armature (130) is located on said moving member (103) side, and said magnet (120) is located on said stationary member (102) side, a plurality of said magnets (120) form a magnet row along a longitudinal direction of said stationary member (102), said armature (130) forms an armature (130) row facing said magnet rows,
said linear motor further comprising:
a first air flow path (139) for cooling formed along said magnet (120),
a first air supply means (141, 142) through which said first air flow path (139) for cooling is supplied with wind,
a forth air flow path (S) for cooling formed in said moving member (103) so as to communicate with said first air flow path (139) for cooling, said first air flow path (139) for cooling is supplied with wind by said first air supply means (141, 142), thereby said wind is entered into said fourth air flow path (S) for cooling so as to cool said armature (130),
**characterized in that**
said stationary member (102) has a slender shape, said moving member (103) is in the shape of a cylinder and is fitted on said stationary member (102) with a play, a plurality of said magnet rows is arranged on the circumference of said slender stator so as to constitute said stator, a plurality of said armatures (130) forms armature (130) rows having two or more armatures along said longitudinal direction, the moving member comprising a plurality of said armature rows arranged on its circumference and said plurality of armature rows facing said magnet rows of said stator and said fourth air flow path (S) for cooling is located between two rows of said armature rows adjacent to each other.

2. The linear motor according to claim 1, wherein said moving member (103) is moved in said first air flow path (139) for cooling.

3. The linear motor according to claim 1, wherein one first air supply means (141, 142) is located on each of both ends of said first air flow path (139) for cooling.

4. The linear motor according to claim 1, wherein said first air supply means (141, 142) is provided on said moving member (103).

5. The linear motor according to claim 1, wherein said first air supply means (141, 142) supplies said fourth air flow path formed in said moving member (103) with wind.

## Patentansprüche

1. Linearmotor mit einem stationären Element (102) und einem beweglichen Element (103), die derart angeordnet sind, dass sie einander gegenüberstehen und um das bewegliche Element (103) entlang des stationären Elements (102) unter Nutzung einer Kraft zu bewegen, die zwischen einem Magnet (120) und einem Anker (130) erzeugt wird; wobei der Anker (130) auf der Seite des beweglichen Elements (103) angeordnet Ist und der Magnet (120) auf der Seite des stationären Elements (102) angeordnet ist, mehrere Magnete (120) eine Magnetreihe entlang einer Längsrichtung des stationären Elements (102) bilden, der Anker (130) eine Ankerreihe bildet, die den Magnetreihen gegenübersteht,
wobei der Linearmotor ferner aufweist:
einen ersten Luftströmungsweg (139) zum Kühlen, der entlang des Magneten (120) ausgebildet ist,
ein erstes Luftzuführungsmittel (141, 142), durch das dem ersten Luftströmungsweg (139) zum Kühlen Wind zugeführt wird,
einen vierten Luftströmungsweg (S) zum Kühlen, der In dem beweglichen Element (103) ausgebildet ist, um mit dem ersten Luftströmungsweg (139) zum Kühlen in Verbindung zu stehen, wobei dem ersten Luftströmungsweg (139) zum Kühlen Wind durch das erste Luftzuführungsmittei (141, 142) zugeführt wird, wodurch der Wind in den vierten Luftströmungsweg (S) zum Kühlen eingebracht wird, um so den Anker (130) zu kühlen,
**dadurch gekennzeichnet, dass**
das stationäre Element (102) eine schlanke Form aufweist, das bewegliche Element (103) die Form eines Zylinders hat und auf dem stationären Element (102) mit einem Spiel angebracht ist, mehrere Magnetreihen an dem Umfang des schlanken Stators angeordnet sind, um so den Stator zu bilden, mehrere Anker (130) Ankerreihen mit zwei oder mehreren Ankern entlang der Längsrichtung bilden, das bewegliche Element mehrere Ankerreihen aufweist, die an seinem Umfang angeordnet sind, und die mehreren Ankerreihen den Magnetreihen des Stators gegenüberstehen und der vierte Luftströmungsweg (S) zum Kühlen zwischen zwei Reihen der Ankerreihen, die aneinander grenzen, angeordnet ist.

2. Linearmotor nach Anspruch 1, wobei das bewegliche Element (103) in dem ersten Luftströmungsweg (139) zum Kühlen bewegt wird.

3. Linearmotor nach Anspruch 1, wobei ein erstes Luftzuführungsmittel (141, 142) an jedem der beiden Enden des ersten Luftströmungswegs (139) zum Kühlen angeordnet ist.

4. Linearmotor nach Anspruch 1, wobei das erste Luftzuführungsmittel (141, 142) an dem beweglichen Element (103) bereitgestellt ist.

5. Linearmotor nach Anspruch 1, wobei das erste Luftzuführungsmittel (141, 142) dem vierten Luftströmungsweg, der in dem beweglichen Element (103) ausgebildet ist, Wind zuführt.

## Revendications

1. Moteur linéaire comportant un élément stationnaire (102) et un élément mobile (103) situés de manière à se faire face l'un l'autre et de manière à déplacer ledit élément mobile (103) le long dudit élément stationnaire (102), en faisant usage d'une force générée entre un aimant (120) et une armature (130) ; dans lequel ladite armature (130) est située du côté dudit élément mobile (103), et ledit aimant (120) est situé du côté dudit élément stationnaire (102), une pluralité desdits aimants (120) forment une rangée d'aimants le long d'une direction longitudinale dudit élément stationnaire (102), ladite armature (130) forme une rangée d'armature (130) faisant face auxdites rangées d'aimants,
ledit moteur linéaire comprenant en outre :
un premier trajet d'écoulement d'air (139) à des fins de refroidissement formé le long dudit aimant (120),
un premier moyen d'alimentation en air (141, 142) à travers lequel ledit premier trajet d'écoulement d'air (139) à des fins de refroidissement est alimenté avec du vent,
un quatrième trajet d'écoulement d'air (S) à des fins ce refroidissement formé dans ledit élément mobile (103) de manière à communiquer avec ledit premier trajet d'écoulement d'air (139) à des fins de refroidissement, ledit premier trajet d'écroulement d'air (139) à des fins de refroidissement est alimenté avec du vent par ledit premier moyen d'alimentation en air (141, 142), ainsi ledit vent entre dans ledit quatrième trajet d'écoulement d'air (S) à des fins de refroidissement de manière à refroidir ladite armature (130),
**caractérisé en ce que**
ledit élément stationnaire (102) a une forme affinée, ledit élément mobile (103) a la forme d'un cylindre et est ajusté sur ledit élément stationnaire (102) avec un jeu d'assemblage, une pluralité desdites rangées d'aimants est agencée sur la circonférence dudit stator affiné de manière à constituer ledit stator, une pluralité desdites armatures (130) forme les rangées d'armature (130) comportant deux ou plus armatures le long de ladite direction longitudinale, l'élément mobile comprenant une pluralité desdites rangées d'armatures agencées sur sa circonférence et ladite pluralité de rangées d'armature faisant face auxdites rangées d'aimants dudit stator et ledit quatrième trajet d'écoulement d'air (S) à des fins de refroidissement est situé entre deux rangées desdites rangées d'armatures adjacentes l'une à l'autre.

2. Moteur linéaire selon la revendication 1, dans lequel ledit élément mobile (103) est déplacé dans ledit premier trajet d'écoulement d'air (139) à des fins de refroidissement.

3. Moteur linéaire selon la revendication 1, dans lequel un premier moyen d'alimentation en air (141, 142) est situé sur chacune des deux extrémités dudit premier trajet d'écoulement d'air (139) à des fins de refroidissement.

4. Moteur linéaire selon la revendication 1, dans lequel ledit premier moyen d'alimentation en air (141, 142) est prévu sur ledit élément mobile (103).

5. Moteur linéaire selon la revendication 1, dans lequel ledit premier moyen d'alimentation en air (141, 142) alimente ledit quatrième trajet d'écoulement d'air formé dans ledit élément mobile (103) avec du vent.
